(19) Europäisches Patentamt
European Patent Office
Office européen des brevets

(11) **EP 1 808 683 B1**

(12) **EUROPÄISCHE PATENTSCHRIFT**

(45) Veröffentlichungstag und Bekanntmachung des Hinweises auf die Patenterteilung:
**16.06.2010 Patentblatt 2010/24**

(51) Int Cl.:
***G01L 11/02*** *(2006.01)*

(21) Anmeldenummer: **06022787.3**

(22) Anmeldetag: **02.11.2006**

(54) **Verfahren zur Ermittlung des Druckes eines Gases oder Gasgemisches in einem Unterdruckgefäss mittels der Absorptionsspektroskopie**

Method for determining the pressure of a gas or gas mixture in a vacuum vessel by means of absorption spectroscopy

Procédé destiné à la détermination de la pression d'un gaz ou d'un mélange gazeux dans un appareil sous-pression à l'aide de la spectroscopie d'absorption

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **14.01.2006 DE 102006001902**

(43) Veröffentlichungstag der Anmeldung:
**18.07.2007 Patentblatt 2007/29**

(73) Patentinhaber: **LaVision GmbH**
**37081 Göttingen (DE)**

(72) Erfinder: **Berg, Thomas**
**37081 Göttingen (DE)**

(74) Vertreter: **Walther, Walther & Hinz GbR**
**Heimradstrasse 2**
**34130 Kassel (DE)**

(56) Entgegenhaltungen:
**EP-A- 0 590 962          WO-A-2005/040753**
**DE-A1-102004 014 984**

• **FUNKE HANS H ET AL: "Techniques for the measurement of trace moisture in highpurity electronic specialty gases" REVIEW OF SCIENTIFIC INSTRUMENTS, AIP, MELVILLE, NY, US, Bd. 74, Nr. 9, 1. September 2003 (2003-09-01), Seiten 3909-3933, XP012041017 ISSN: 0034-6748**

**Beschreibung**

Die Erfindung betrifft ein Verfahren zur Ermittlung des Druckes eines Gases oder Gasgemisches in einem Unterdruckgefäß mittels der Absorptions-spektroskopie.

Gerade in der Medizintechnik werden pulverförmige Präparate häufig in Ampullen gelagert. Zur Herstellung bzw. bei der Befüllung derartiger Ampullen besteht nun das Problem, dass sichergestellt sein muss, dass diese Ampullen im Inneren einen bestimmten Unterdruck aufweisen, um zu gewährleisten, dass das in der Ampulle gelagerte Präparat während der Lagerung durch eindringende Luft keinen Schaden nimmt.

Das bedeutet, dass derartige Ampullen dahingehend überprüft werden müssen, ob in diesen Anpullen bestimmte Gase aus der Umgebung, also z.B. Wasserdampf, enthalten sind, um beispielsweise aus der Wasserdampfkonzentration in der Ampulle darauf zu schließen, inwieweit das Vakuum noch in Takt ist.

In diesem Zusammenhang sind bereits zwei Messmethoden bekannt, um den Wasserstoffpartialdruck oder auch das Gasvolumen in der Ampulle zu bestimmen.

Ein Verfahren zur Spurenanalyse von Feuchtigkeit mittels Absorptionsspektroskopie ist aus Hans Funke et al: "Techniques for the measurement of trace moisture in highpurity electronic specialty gases" REVIEW OF SCIENTIFIC INSTRUMENTS, Bd. 74, Nr. 9, 1. September 2003 (2003-09-01), Seiten 3909-3933, bekannt. Es offenbart ein Verfahren zur Ermittlung des Druckes eines Gases in einem Unterdruckgefäß, das sich in einer Umgebung befindet, die ebenfalls das zu messende Gas unter anderem Druck als in dem Unterdruckgefäß aufweist. In einem ersten Schritt wird die Absorptionskurve des zu ermittelnden Gases in dem Strahlengang zwischen Laser und Detektor ermittelt. In einem zweiten Schritt wird das Unterdruckgefäß in den Strahlengang eingebracht und die Absorptionskurve des zu ermittelnden Gases im Strahlengang mit eingesetztem Unterdruckgefäß wird ermittelt.

Nach einem bekannten Stand der Technik (WO 2005/040753 A2) ist insofern vorgesehen, eine Kammer bereitzustellen, in die eine Ampulle zur Überprüfung eingestellt wird. Geht man davon aus, dass die Größe des Wasserdampfpartialdruckes in der Ampulle ein Maß für die Qualität des Vakuums darstellt, so ergibt sich aus dieser Überlegung, dass die Menge an Wasserdampf in der Ampulle zu bestimmen ist. Dieses bekannte Verfahren arbeitet mit der Absorptionsspektroskopie. Insofern ist sicherzustellen, dass in der Messstrecke, also außerhalb der Ampulle, gerade das Gas nicht enthalten ist, das in der Ampulle, hier z.B. Wasserdampf, nachgewiesen werden soll. Insofern ist vorgesehen, dass nach dem Einbringen der Ampulle in die Kammer, die Kammer mit einem Gas gespült wird, das gerade nicht Gegenstand der Bestimmung des Gases in der Ampulle ist. Das bedeutet, bezogen auf Wasserdampf wird die Kammer mit trockener Luft gespült, um dann im Wege der Absorptions-spektroskopie den Wasserdampfpartialdruck in der einzelnen Ampulle bestimmen zu können.

Es ist unmittelbar einsichtig, dass eine solche Spülung mit trockener Luft bei jeder Ampulle erneut erfolgen muss. Nach dem Spülen der Kammer mit trockener Luft muss zunächst eine Messung durchgeführt werden, um zu überprüfen, ob genau dieses Gas, was Gegenstand der Messung in der Ampulle ist, in der Kammer nicht mehr vorhanden ist. Ist dies sichergestellt, erfolgt die eigentliche Messung zur Bestimmung der Gaskonzentration in der Ampulle. Insbesondere das Spülen der Kammer mit trockener Luft nach jedem Ampullenwechsel ist zeitaufwendig und auch teuer, da zum Trocknen der Luft eine erhebliche Menge an Energie erforderlich ist. Darüber hinaus muss die Dichtigkeit der Kammer gewährleistet sein, da es ansonsten zu Verfälschungen des Messergebnisses kommen kann.

Die diesem Verfahren zugrunde liegende spektroskopische Messmethode basiert auf der Absorption schmalbandiger Strahlung aus abstimmbaren Diodenlasern (englisch: TDLAS tunable diode laser absorption spectroscopy). Hierzu wird die Ampulle in den Strahlengang des Lasers eingebracht. Die Intensität der Laserstrahlung wird aus der dem Emitter (Laser) gegenüberliegenden Seite mit einem Detektor aufgezeichnet, z. B. einer Fotodiode. Die zentrale Laserwellenlänge wird dabei auf das Absorptionsmaximum einer freistehenden Absorptionskurve bei 1358 nm für z. B. Wasserdampf abgestimmt. Ein solcher Diodenlaser kann sehr schnell von seiner zentralen Wellenlänge verstimmt werden, wobei der Abstimmbereich typischerweise einige wenige Wellenzahlen beträgt. Durch dieses Vorgehen wird die Absorptionslinie des im Absorptionsweg enthaltenen Wasserdampfes vollständig abgedeckt. Die Absorbanz bestimmt sich zu

$$A(\lambda) = \ln\left(\frac{I_0(\lambda)}{I(\lambda)}\right),$$

wobei $I_0$, $I$ die Lichtintensität vor und nach der Absorption darstellt. Zu der Bestimmung $I_0$, $I$ sind aus dem Stand der Technik (M. Lackner et al., In-Situ Laser Spectroscopy of CO, CH4 and H2O in a particle laden laboratory-scale fluidized bed combustor, Thermal Science: Vol. 6 (2002), No. 2, pp. 13-27) bereits Methoden bekannt, um den Einfluss von Störungen z. B. durch die Ampullenwand zu eliminieren.

Durchtritt der Laserstrahl das Gefäß, so wird der Laserstrahl durch die im Gefäß enthaltenen Wassermoleküle absorbiert. Zusätzlich wird der Laser auch durch die in der Außenluft vorhandenen Wassermoleküle absorbiert, wenn diese in der Umgebung vorhanden wären. Insofern ist beim Stand der Technik vorgesehen, die Kammer mit trockener Luft zu spülen, so dass im Strahlengang kein Wasserdampf mehr vorhanden ist.

Eine weitere aus dem Stand der Technik (Beer-Lambart'sche Gesetz) bekannte Methode zur Bestimmung des Wasserdampfpartialdruckes in einer Ampulle mittels Absorptionsspektroskopie basiert auf folgenden Überlegungen:

Zur Bestimmung der Absorptionskurve in dem Unterdruckgefäß gilt die Beziehung $A_G(\lambda) = A_M(\lambda) - c \cdot A_R(\lambda)$.
$A_G(\lambda)$: Absorptionskurve-Unterdruckgefäß;
$A_M(\lambda)$: Absorptionskurve der Messung mit im Strahlengang eingesetztem Unterdruckgefäß;
$A_R(\lambda)$: Absorptionskurve, wie bei AM , jedoch ohne Unterdruckgefäß im Strahlengang.

Die Bezeichnung $A_G(\lambda) = A_M(\lambda) - c \cdot A_R(\lambda)$ gilt ebenfalls, wenn die Absorptionskurven nicht direkt bestimmt werden, sondern deren Ableitungen, wobei hierdurch die Messung empfindlicher wird. Dies geschieht bei der TDLAS-Technik durch hochfrequente Modulation des Laserlichts (P, Werke et al., Near- and mid-infrared laser optical sensors for gas analysis, Optics and Lasers in Engineering 37 (2002) 101-114). Das heißt, die Erfindung umfasst sowohl die Messung durch direkte Bestimmung der Absorbanz als auch durch Verfahren, die die Ableitung der Absorbanz liefern.

Die Proportionalitätskonstante in der Beziehung $A_G(\lambda) = A_M(\lambda) - c \cdot A_R(\lambda)$ wird wesentlich bestimmt durch die Messstrecke U des Strahlenganges und den Durchmesser der Ampulle bzw. des Unterdruckgefäßes. Der Durchmesser des Unterdruckgefäßes ist naturgemäß bekannt. Nicht bekannt ist allerdings die Wegstrecke des Strahlenganges. Die Wegstrecke ist auch äußerst schwer zu bestimmen, da in U der vollständige Abstand zwischen Laser und Detektor einfließt, also insbesondere auch die Wegstrecke innerhalb der einzelnen Geräte, so dass U praktisch nicht korrekt zu ermitteln ist. Des Weiteren ist sicherzustellen, dass das zu messende Gas über die gesamte Wegstrecke hinweg in gleicher Konzentration vorliegt, also nicht nur in der freien Weglänge zwischen Laser-Emitter und Detektor, sondern auch innerhalb der einzelnen Gerätschaften. Auch dies ist schlussendlich nicht sicherzustellen, weshalb diese Messmethode gegenüber der zuerst genannten Messmethode zwar preiswerter ist, aber wesentlich ungenauer bzw. der messtechnische Aufwand wesentlich höher ist, als bei der ersten Methode.

Der Erfindung liegt daher die Aufgabe zugrunde, ein Verfahren zur Ermittlung des Druckes eines Gases oder Gasgemisches in einem Unterdruckgefäß mittels der Absorptionsspektroskopie, das sich in einer Umgebung befindet, die ebenfalls das zu messende Gas unter anderem Druck als in dem Unterdruckgefäß aufweist, bereitzustellen, das einerseits durch einen geringen Aufwand geprägt ist, andererseits aber eine hohe Zuverlässigkeit hinsichtlich der Bestimmung des zu messenden Gases in dem Unterdruckgefäß (Ampulle) gewährleistet, und dass darüber hinaus preiswert in der Durchführung ist.

Das erfindungsgemäße Verfahren zur Ermittlung des Druckes eines Gases oder Gasgemisches in einem Unterdruckgefäß mittels der Absorptionsspektroskopie, das sich in einer Umgebung befindet, die ebenfalls das zu messende Gas unter anderem Druck als in dem Unterdruckgefäß aufweist, zeichnet sich erfindungsgemäß durch einen Laser und einen Laserdetektor aus, die beabstandet zueinander angeordnet sind, wobei in einem ersten Schritt die Absorptionskurve $A_R(\lambda)$ des zu ermittelnden Gases in dem Strahlengang zwischen Laser und Detektor ermittelt wird, wobei in einem zweiten Schritt in den Strahlengang das Unterdruckgefäß eingebracht wird und die Absorptionskurve AM $(\lambda)$ des zu ermittelnden Gases im Strahlengang mit eingesetztem Unterdruckgefäß ermittelt wird, dass die Absorptionskurve $A_R(\lambda)$ außerhalb der Absorptionskurve des zu messenden Gases mit der Absorptionskurve AM $(\lambda)$ durch Stauchung zur Deckung gebracht wird, wobei das Maß der Stauchung durch einen Proportionalitätsfaktor c bestimmt ist, wobei zur Bestimmung des zu messenden Gases in dem Unterdruckbehälter folgende Beziehung gilt:

$$A_G(\lambda) \simeq A_M(\lambda) - c \; A_R(\lambda).$$

Für das erfindungsgemäße Verfahren wird von folgender Überlegung ausgegangen:

Zunächst einmal wird vorausgesetzt, dass die Bestimmung von $A_R(\lambda)$ und AM $(\lambda)$ unmittelbar zeitlich nacheinander vorgenommen wird, so dass Druck und Temperatur in der Umgebung bei beiden Messungen im Wesentlichen gleich sind. Darüber hinaus ist bekannt, dass mit steigendem Druck eine spektrale Verbreiterung der Absorptionskurve einhergeht. Das heißt, dass die Absorptionskurve im Strahlengang wesentlich breiter ist als die Absorptionskurve in dem Unterdruckgefäß bei gleichem zu messenden Gas.

Wie bereits ausgeführt, besteht das erfindungsgemäße Verfahren aus mehreren Schritten, wobei in dem ersten Schritt die Absorptionskurve $A_R(\lambda)$ bestimmt wird, die sich daraus ergibt, dass die Absorptionskurve des zu messenden Gases in der Ampulle, z. B. Wasserdampf, in dem Strahlengang ohne das Unterdruckgefäß ermittelt wird. Zu dem zweiten Schritt für die Ermittlung von der Absorptionskurve AM ($\lambda$) mit dem Unterdruckgefäß im Strahlengang wird der Laserstrahl durch die im Gefäß enthaltenen Wassermoleküle absorbiert. Zusätzlich wird der Laser aber auch durch die in der Umgebung des Strahlenganges in der Luft vorhandenen Wassermoleküle absorbiert.

Bestimmend für die Absorptionskurve ist zum einen die Dichte der Wassermoleküle bzw. die Höhe des Partialdruckes des Wasserdampfes und zum anderen die Weglänge, d. h. die Länge zwischen Laser-Emitter und Laserdetektor sowie der Druck und die Temperatur. Das heißt, die Absorbanz ist proportional zur Dichte der Moleküle und auch proportional zur Weglänge des Laserlichts, also der Absorptionsweglänge. Die Linienbreite $\Delta(\lambda)$ der Absorptionskurve ist dagegen unabhängig von diesen Größen, dafür aber vom Druck p, der Temperatur T und der Gaszusammensetzung abhängig.

Wie bereits an anderer Stelle erläutert, sollen Druck und Temperatur überall gleich sein, mit Ausnahme der Tatsache, dass sich im Unterdruckgefäß ein Unterdruck befindet. Die Weglänge in der Luft beider Messungen von $A_R$ ($\lambda$) und AM ($\lambda$) unterscheidet sich jedoch nur durch den Durchmesser des Unterdruckgefäßes (Ampulle). Wie bereits ausgeführt, wird p und T in der Umgebung als konstant vorausgesetzt. Insbesondere unter Berücksichtigung der Tatsache, dass die Linienbreite vom Druck abhängig ist und somit die Absorptionskurve von AM ($\lambda$) und $A_R$ ($\lambda$) breiter ist als die Absorptionskurve $A_G$ ($\lambda$) bedeutet dies, dass in den Randbereichen die Absorptionskurven AM ($\lambda$) und $A_R$ ($\lambda$) größer 0, hingegen $A_G$ ($\lambda$) nahezu 0 in diesen Randbereichen ist. Die Unterschiede zwischen AM ($\lambda$) und $A_R$ ($\lambda$) bestehen nur in der unterschiedlichen Weglänge aufgrund des Gefäßes im Strahlengang, da sämtliche weiteren Faktoren als gleich bzw. als konstant angenommen werden. Somit ist der Kurvenverlauf, d.h. die Ausbildung oder Form der Absorptionskurve von AM ($\lambda$) und $A_R$ ($\lambda$) gleich. Das heißt, die Kurven unterscheiden sich nur durch einen Proportionalitätsfaktor c, in Form von

$$c = \frac{A_M(\lambda)}{A_R(\lambda)}$$

in den Randbereichen der Absorptionskurven. Dadurch, dass man $A_M(\lambda)$ und AR($\lambda$) durch den Faktor c zur Deckung bringen kann, kann man den Einfluss der Umgebungsluft auf die Messung eliminieren. Hierdurch lässt sich aus $A_M(\lambda)$ und $A_R(\lambda)$ das Absorptionsspektrum $A_G(\lambda)$ in dem Gefäß nach $A_G(\lambda) = A_M(\lambda) - c \cdot A_R(\lambda)$ ermitteln.

Unter Berücksichtigung der Tatsache, dass die Absorptionskurve AM ($\lambda$) und die Absorptionskurve $A_R$ ($\lambda$) aufgrund des höheren Druckes eine größere Linienbreite aufweisen als die Absorptionskurve $A_G$ ($\lambda$) des Gefäßes, besteht insofern die Möglichkeit, die Kurve $A_R$ ($\lambda$) in diesen Randbereichen in einem Verhältnis derart zu stauchen, dass diese Kurve in den Randbereichen, in denen $A_G$ ($\lambda$) gleich 0 ist, deckungsgleich mit der Kurve AM ($\lambda$) ist. Das Maß der Stauchung gibt nunmehr den Proportionalitätsfaktor c an, durch den sich die Kurven AM ($\lambda$) und $A_R$ ($\lambda$) im Randbereich unterscheiden.

Nach einem besonderen Merkmal der Erfindung ist vorgesehen, dass sich das Maß der Stauchung der Absorptionskurve $A_R$ ($\lambda$) auf die Absorptionskurve AM ($\lambda$) außerhalb der Absorptionskurve des zu messenden Gases durch das Verhältnis der Flächen jeweils unterhalb der Absorptionskurve $A_R$ ($\lambda$) und AM ($\lambda$) zur X-Achse (Wellenlänge) außerhalb der Absorptionskurve des zu messenden Gases durch die folgende Beziehung bestimmt:

$$c \cong (F_{M1} + F_{M2}) : (F_{R1} + F_{R2}) \cong F_{M1} : F_{R1}.$$

Eine andere Variante zur Bestimmung des Proportionalitätsfaktors c besteht in der Erkenntnis, dass das Maß der Stauchung der Absorptionskurve $A_R$ ($\lambda$) auf die Absorptionskurve $A_M$ ($\lambda$) außerhalb der Absorptionskurve des zu messenden Gases durch die Beziehung AM ($\lambda$) $\cong$ C$\cdot A_R$ ($\lambda$) bestimmt ist, wobei durch die Methode der kleinsten quadratischen Abweichungen aus AM ($\lambda$) und $A_R$ ($\lambda$) die Proportionalitätskonstante c näherungsweise zu ermitteln ist.

Anhand der Zeichnungen wird die Erfindung nachstehend beispielhaft näher erläutert:

Fig. 1    zeigt eine Versuchsanordnung, umfassend Laser-Emitter und Laserdetektor;
Fig. 2    zeigt eine Versuchsanordnung gemäß Fig. 1, wobei in dem Strahlengang zwischen Laser-Emitter und Laserdetektor ein Unterdruckgefäß (Ampulle) eingesetzt ist;
Fig. 3    zeigt eine Absorptionskurve $A_R$ ($\lambda$);
Fig. 4    zeigt die Kurven AM ($\lambda$), $A_G$ ($\lambda$) und c $\cdot A_R$ ($\lambda$), jeweils aufgetragen über die Wellenlänge $\lambda$.

Im Folgenden wird in Bezug auf das Beispiel angenommen, dass der Wasserdampfpartialdruck im Unterdruckgefäß bestimmt werden soll. Es kann natürlich auch jedes andere Gas bestimmt werden, das in der Umgebung und im Gefäß vorhanden ist. Wesentlich ist allerdings, dass der Druck in der Umgebung wesentlich größer ist als im Gefäß.

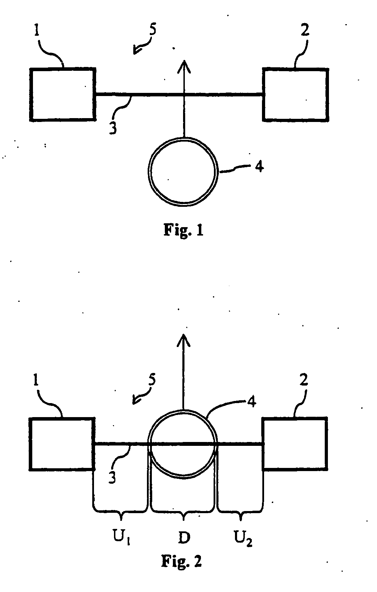

Gemäß Fig. 1 ist der Laser mit 1 bezeichnet, der Laserdetektor zur Messung der Laserleistung mit 2, der Laserstrahl mit 3, das Unterdruckgefäß mit 4 und die Umgebungsluft mit 5. Bei der Versuchsanordnung gemäß Fig. 1 tritt der Laserstrahl nicht durch das Unterdruckgefäß 4 hindurch, d. h. bestimmt wird mit diesem Versuchsaufbau die Absorptionskurve $A_R (\lambda)$.

Zur Bestimmung der Absorptionskurve AM $(\lambda)$ dient der Versuchsaufbau gemäß der Fig. 2. Hierbei ist das Unterdruckgefäß 4 vollständig in den Strahlengang 3 eingebracht, d. h., dass das Gefäß genau zentrisch vom Laserstrahl durchdrungen wird. Die Wegstrecke innerhalb des Unterdruckgefäßes 4 ist mit D bezeichnet. Auf diesem Teilweg wird der Laserstrahl durch die Wassermoleküle im Inneren des Gefäßes absorbiert, deren Dichte mit Hilfe des erfindungsgemäßen Verfahrens bestimmt wird. Außerhalb des Gefäßes durchläuft der Laserstrahl das Umgebungsgas, z. B. Luft, wobei sich der gesamte Weg in Teilstrecken U1 und U2 aufteilt, also in Bereiche vor und hinter dem Unterdruckgefäß. Auf diesen Teilstrecken wird der Laserstrahl z.B. durch die Wassermoleküle des Umgebungsgases absorbiert. Wie bereits ausgeführt, wird durch den Messaufbau gemäß Fig. 2 die Absorptionslinie AM $(\lambda)$ bestimmt. Die Bestimmung der Absorptionslinie des Wasserdampfes in dem Unterdruckgefäß bestimmt sich zu $A_G (\lambda) =$ AM $(\lambda) - c\, A_R (\lambda)$. D. h., dass sich die Absorbanz während der Messung zusammensetzt aus einem Anteil von Wassermolekülen in der Umgebungsluft und von Wassermolekülen im Inneren des Gefäßes. Wie bereits an anderer Stelle erläutert, ist die Linienbreite abhängig vom Druck. D. h., die Linienbreite von AM $(\lambda)$ und $A_R (\lambda)$ ist wesentlich breiter als die Breite der Linie $A_G (\lambda)$, da im Gefäß 4 ein Unterdruck herrscht. Hierbei ist zu bemerken, dass gute Messergebnisse dann zu erzielen sind, wenn das Verhältnis zwischen dem Druck im Gefäß und dem Druck in der Umgebung $P_G : P_U$ etwa 1:5 beträgt.

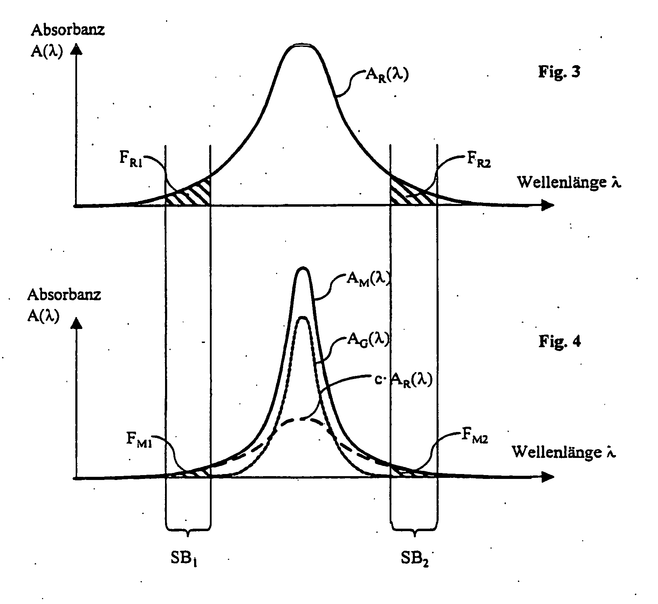

Betrachtet man in diesem Zusammenhang nunmehr die Fig. 3 und 4 so erkennt man Folgendes:

Fig. 3 zeigt den Verlauf der Absorptionskurve $A_R (\lambda)$. Aus der Fig. 4 erkennt man zum einen die Absorptionskurve AM $(\lambda)$ sowie die Kurve c $A_R (\lambda)$. Bekannt ist, dass die Absorptionskurve $A_G (\lambda)$ in den Randbereichen $SB_1$ und $SB_2$ gegen 0 strebt. Wie bereits an anderer Stelle erläutert, sind die Kurven AM $(\lambda)$ und $A_R (\lambda)$ bis auf ihre Größe in ihren Bestandteilen im Verlauf, d.h. in ihrer Form gleich. Der Unterschied in der Größe resultiert allein aufgrund der Tatsache, dass sich im Strahlengang bei AM $(\lambda)$ das Unterdruckgefäß mit dem Wasserdampf befindet. Da bis auf die Weglänge aufgrund des Durchmessers des Unterdruckgefäßes im Strahlengang (s. Fig. 2) sämtliche anderen Faktoren, die den Verlauf sowohl der Absorptionskurve AM $(\lambda)$ als auch $A_R (\lambda)$ bestimmen, gleich sind bzw. als konstant angenommen werden, besteht der Unterschied in der Größe der Absorptionskurven AM $(\lambda)$ und $A_R (\lambda)$ im Zusammenhang mit der unterschiedlichen Wegstrecke. Da in den Bereichen $SB_1$ und $SB_2$ die Absorptionskurve $A_G (\lambda)$ des Unterdruckgefäßes gegen 0 strebt, kann dort die Kurve $A_R (\lambda)$ so weit gestaucht werden, dass sie zur Deckung mit der Absorptionskurve AM $(\lambda)$ gelangt. Das Maß der Stauchung stellt den Proportionalitätsfaktor c dar, um den die Kurve $A_R (\lambda)$ gestaucht werden muss, um in den Bereichen $SB_1$ und $SB_2$ zur Deckung mit AM $(\lambda)$ zu gelangen.

Der Proportionalitätsfaktor bestimmt sich somit näherungsweise z. B. aus dem Verhältnis der Flächen wie folgt:

$$c \cong (F_{M1} + F_{M2}) : (F_{R1} + F_{R2}) \cong F_{M1} : F_{R1}$$

Eine weitere Möglichkeit zur Ermittlung des Proportionalitätsfaktors c besteht in der Anwendung der Methode der kleinsten quadratischen Abweichungen. Hierbei gilt, das AM $(\lambda)$ ungefähr $= c \cdot A_R (\lambda)$ für Wellenlängen $\lambda$ innerhalb von $SB_1$ und $SB_2$ ist. Durch die Methode der kleinsten quadratischen Abweichung, kann aus den Messdaten AM $(\lambda)$ und $A_R (\lambda)$ innerhalb der spektralen Bereiche $SB_1$ und $SB_2$ näherungsweise der Proportionalitätsfaktor c wie folgt ermittelt werden:

In der Regel liegen die Kurven digitalisiert vor, so dass die Kurve $A_M(\lambda)$ durch eine Datenreihe $A_{M,i}$ und $A_R(\lambda)$ durch eine Datenreihe $A_{R,i}$ repräsentiert werden, wobei i der Index auf die Einträge der Datenreihe ist.

Die Menge SB enthält alle Indizes von Datenpunkten innerhalb der Bereiche $SB_1$ und $SB_2$, also dort wo die Kurven angepasst werden sollen.

Man muss also den Ausdruck $\displaystyle\sum_{i \in SB}\left(A_{M,i} - c \cdot A_{R,i}\right)^2$ minimieren.

Die Lösung erhält man, wenn man die Nullstellen der Ableitung des Ausdrucks bestimmt:

$$0 = \frac{\partial}{\partial c}\left[\sum_{i \in SB}\left(A_{M,i} - c \cdot A_{R,i}\right)^2\right] = \sum_{i \in SB}2\left(A_{M,i} - c \cdot A_{R,i}\right)\left(-A_{R,i}\right) = 2\sum_{i \in SB}\left(-A_{M,i} \cdot A_{R,i}\right) + 2c\sum_{i \in SB}Ai$$

$$\Rightarrow c\sum_{i \in SB}A_{R,i}^2 = \sum_{i \in SB}\left(A_{M,i} \cdot A_{R,i}\right)$$

$$\Rightarrow c = \frac{\sum_{i \in SB}\left(A_{M,i} \cdot A_{R,i}\right)}{\sum_{i \in SB}A_{R,i}^2}$$

Damit kann man c direkt aus den Datenreihen der digitalisierten Absorptionskurven bestimmen.

Die Qualität des Vakuums bzw. der Restgasgehalt, d. h. der Partialdruck des zu messenden Gases, lässt sich aus dem Proportionalitätsfaktor c und der Absorptionskurve $A_G(\lambda)$ bestimmen. Dies insofern, als die Fläche unterhalb der Absorptionskurve im Wesentlichen proportional zum Wasserdampfpartialdruck und zum bekannten Innendurchmesser der Ampulle ist. Daraus lässt sich der Restfeuchtegehalt in der Ampulle bestimmen. Die Linienbreite $\Delta(\lambda)$ der Absorptionskurve $A_G(\lambda)$ erlaubt in Grenzen Rückschlüsse auf den gesamten Innendruck.

**Patentansprüche**

1. Verfahren zur Ermittlung des Druckes eines Gases oder Gasgemisches in einem Unterdruckgefäß mittels der Absorptionsspektroskopie, das sich in einer Umgebung befindet, die ebenfalls das zu messende Gas unter anderem Druck als in dem Unterdruckgefäß aufweist, umfassend einen Laser und einen Laserdetektor, wobei in einem ersten Schritt die Absorptionskurve $A_R(\lambda)$ des zu ermittelnden Gases in dem Strahlengang zwischen Laser und Detektor ermittelt wird, wobei in einem zweiten Schritt in den Strahlengang das Unterdruckgefäß eingebracht wird und die Absorptionskurve AM $(\lambda)$ des zu ermittelnden Gases im Strahlengang mit eingesetztem Unterdruckgefäß ermittelt wird,

**dadurch gekennzeichnet dass** die Absorptionskurve $A_R(\lambda)$ außerhalb der Absorptionskurve des zu messenden Gases mit der Absorptionskurve AM $(\lambda)$ durch Stauchung zur Deckung gebracht wird, wobei das Maß der Stauchung durch einen Proportionalitätsfaktor c bestimmt ist, wobei zur Bestimmung des zu messenden Gases in dem Unterdruckbehälter folgende Beziehung gilt:

$$A_G(\lambda) = A_M(\lambda) - c \cdot A_R(\lambda).$$

2. Verfahren nach Anspruch 1,
**dadurch gekennzeichnet,**
**dass** das Maß der Stauchung der Absorptionskurve $A_R(\lambda)$ auf die Absorptionskurve $A_M(\lambda)$ außerhalb der Absorptionslinie des zu messenden Gases durch das Verhältnis der Flächen jeweils unterhalb der Absorptionskurve $A_R(\lambda)$ und $A_M(\lambda)$ zur x-Achse außerhalb der Absorptionskurve des zu messenden Gases durch folgende Beziehung bestimmt ist:

$$F_{M1} : F_{R1} \cong (F_{M1} + F_{M2}) : (F_{R1} + F_{R2}) = c$$

3. Verfahren nach Anspruch 1,
**dadurch gekennzeichnet,**
**dass** das Maß der Stauchung der Absorptionskurve $A_R(\lambda)$ auf die Absorptionskurve $A_M(\lambda)$ außerhalb der Absorptionskurve des zu messendes Gases durch die Beziehung $A_M(\lambda)$ ungefähr $= c \cdot A_R(\lambda)$ bestimmt ist, wobei durch die Methode der kleinsten quadratischen Abweichungen aus $A_M(\lambda)$ und $A_R(\lambda)$ die Proportionalitätskonstante c näherungsweise zu ermitteln ist.

**Claims**

1. A method of determining, by means of absorption spectroscopy, the pressure of a gas or gas mixture in a vacuum container located in an environment that also contains the gas to be measured, but at a pressure different from that in the vacuum container, comprising a laser and a laser detector, the absorption curve $A_R(\lambda)$ of the gas to be determined being determined in the beam path between laser and detector in a first step, the vacuum container being placed into the beam path and the absorption curve $A_M(\lambda)$ of the gas to be determined being determined in the beam path into which the vacuum container has been placed in a second step,
**characterized in**
**that** the absorption curve $A_R(\lambda)$ is made to coincide by compression with the absorption curve $A_M(\lambda)$ outside of the absorption curve of the gas to be measured, the extent of compression being determined by a proportionality factor c, the following relation applying for determining the gas to be measured in the vacuum container:

$$A_G(\lambda) = A_M(\lambda) - c \cdot A_R(\lambda).$$

2. The method as set forth in claim 1,
**characterized in**
**that** the extent of compression of the absorption curve $A_R(\lambda)$ onto the absorption curve $A_M(\lambda)$ outside of the absorption line of the gas to be measured is determined by the ratio of the surface areas beneath a respective one of the absorption curves $A_R(\lambda)$ and $A_M(\lambda)$ to the X axis outside of the absorption curve of the gas to be measured with the following relation:

$$F_{M1} : F_{R1} \cong (F_{M1} + F_{M2}) : (F_{R1} + F_{R2}) = c.$$

3. The method as set forth in claim 1,
**characterized in**
**that** the extent of compression of the absorption curve $A_R(\lambda)$ onto the absorption curve $A_M(\lambda)$ outside of the absorption line of the gas to be measured is determined by the relation $A_M(\lambda)$ approximately equal to $c \cdot A_R(\lambda)$, the proportionality constant c being determined from $A_M(\lambda)$ and $A_R(\lambda)$ by approximation, using the method of the smallest square deviations.

**Revendications**

1. Procédé pour déterminer la pression d'un gaz ou d'un mélange gazeux dans un récipient à vide au moyen d'un spectroscope d'absorption qui se trouve dans un environnement qui comporte aussi le gaz à mesurer, sous une pression autre que dans le récipient à vide, comprenant un laser et un détecteur de laser, dans lequel, dans une première étape, on détermine la courbe d'absorption $A_R(\lambda)$ du gaz à déterminer sur la trajectoire du faisceau entre le laser et le détecteur, dans lequel, dans une seconde étape, on met le récipient à vide en place sur la trajectoire du faisceau et on détermine la courbe d'absorption $A_M(\lambda)$ du gaz à déterminer sur la trajectoire du faisceau avec le récipient à vide mis en place, **caractérisé en ce que** la courbe d'absorption $A_R(\lambda)$, en dehors de la courbe d'absorption du gaz à mesurer, est superposée avec la courbe d'absorption $A_M(\lambda)$ par écrasement, la mesure de l'écrasement étant définie par un coefficient de proportionnalité $\underline{c}$, tandis que, pour la détermination du gaz à mesurer contenu dans le récipient à vide, on applique la relation suivante:

$$A_G(\lambda) = A_M(\lambda) - c \cdot A_R(\lambda).$$

2. Procédé selon la revendication 1,
**caractérisé en ce que**
la mesure de l'écrasement de la courbe d'absorption $A_R(\lambda)$ sur la courbe d'absorption $A_M(\lambda)$, en dehors de la ligne d'absorption du gaz à mesurer, est déterminée par le rapport des surfaces comprises respectivement sous les courbes d'absorption $A_R(\lambda)$ et $A_M(\lambda)$, jusqu'à l'axe des x en dehors de la courbe d'absorption du gaz à mesurer par la relation suivante :

$$F_{M1} : F_{R1} \cong (F_{M1} + F_{M2}) : (F_{R1} + F_{R2}) = c.$$

3. Procédé selon la revendication 1,
   **caractérisé en ce que**
   la valeur de l'écrasement de la courbe d'absorption $A_R(\lambda)$ sur la courbe d'absorption $A_M(\lambda)$, en dehors de la courbe d'absorption du gaz à mesurer, est déterminée par la relation $A_M(\lambda)$ environ = c $\cdot$ $A_R(\lambda)$, la constante de proportionnalité $\underline{c}$ pouvant être déterminée par la méthode des moindres écarts quadratiques de $A_M(\lambda)$ et $A_R(\lambda)$.

Fig. 1

$U_1$     D     $U_2$

Fig. 2

Absorbanz
A(λ)

$A_R(\lambda)$

Fig. 3

$F_{R1}$

$F_{R2}$

Wellenlänge λ

Absorbanz
A(λ)

$A_M(\lambda)$

$A_G(\lambda)$

$c \cdot A_R(\lambda)$

Fig. 4

$F_{M1}$

$F_{M2}$

Wellenlänge λ

$SB_1$

$SB_2$

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005040753 A2


**In der Beschreibung aufgeführte Nicht-Patentliteratur**

- Techniques for the measurement of trace moisture in highpurity electronic specialty gases. **Hans Funke et al.** REVIEW OF SCIENTIFIC INSTRUMENTS. 01. September 2003, vol. 74, 3909-3933
- **M. LACKNER et al.** In-Situ Laser Spectroscopy of CO, CH4 and H2O in a particle laden laboratory-scale fluidized bed combustor. *Thermal Science,* 2002, vol. 6 (2), 13-27
- **P, WERKE et al.** Near- and mid-infrared laser optical sensors for gas analysis. *Optics and Lasers in Engineering,* 2002, vol. 37, 101-114